# EUROPEAN PATENT SPECIFICATION

(11) **EP 3 893 350 B1**
(45) Date of publication and mention of the grant of the patent: **18.01.2023**
(21) Application number: 21165482.7
(22) Date of filing: 29.03.2021
(51) Int. Cl.: H02H 9/00, H02H 3/06, B60M 3/00, B60M 3/04, B61L 27/40

(54) **RECONNECTION OF ELECTRICALLY POWERED TRAIN UNITS**
WIEDERVERBINDUNG VON ELEKTRISCH ANGETRIEBENEN ZUGEINHEITEN
RECONNEXION D'UNITÉS DE TRAIN À TRACTION ÉLECTRIQUE

(30) Priority: 30.03.2020 GB 202004592
(43) Date of publication of application: 13.10.2021
(73) Proprietor: Hitachi Rail Ltd., London, Greater London EC4M 7AW (GB)
(72) Inventor: MENDEZ, Carlos, London, Greater London EC4M 7AW (GB); MOCHIZUKI, Kento, Tokyo 100-8280 (JP)
(74) Representative: Mewburn Ellis LLP

(56) References cited:
- CN-A- 101 746 285
- JP-A- 2011 111 137
- JP-A- 2017 055 500

## Description

### Field of the disclosure

The present disclosure relates to reconnection of electrically powered train units.

### Background

Electrically powered trains generally have a safety function by which they disconnect their traction equipment from the electrical power supply if that supply becomes abnormal. For example, if the supply voltage becomes abnormally high or low, a train may open a breaker to disconnect its traction equipment. When the abnormal state is resolved by the supply voltage returning to a normal range, the breaker must be closed to reconnect the traction equipment to the electrical power supply in order to restart train operation.

A problem arises, however, when plural train units are located in a same electrical power supply section of rail network. If the train units detect the voltage return to the normal range at the same time and simultaneously close their breakers in response, high electric current flows into each train unit can impose a significant burden on the source of electrical power (e.g. electrical substation) for that section.

For example, many modern trains are fitted with a breaker such as a VCB (vacuum circuit breaker) which is operable to connect a transformer of the train's traction equipment to a pantograph for an overhead line. When the breaker is closed, the steady state of the transformer core's magnetic flux cannot be instantly accommodated and the steady state value is reached after a finite time determined by the rate at which the circuit can accept energy. One of the effects of this is that the primary coil of the transformer draws a high peak current known as the transformer inrush current. This can be many times higher than the normal rated current of the transformer. Thus it can be important to prevent the inrush currents of plural train units occurring at the same time and placing an unrealistic combined load on the source of electrical power due to a superposition of these currents.

A known approach for preventing different trains on the same electrical supply section from closing their breakers at the same time is to allocate each train in a fleet of trains operating on a given part of the network with a respective and different, fixed breaker closing time delay. Then, even if all the trains on a given electrical power supply section detect the return of the supply voltage to its normal range at the same time, simultaneous closures of their breakers and the high load at the power supply system which would follow can be avoided by closing their breakers according to their respective fixed time delays.

However, this approach has a drawback when there is a large number of trains in the fleet.

In particular, while some of the trains will have relatively short breaker closing time delays, others will have relatively long delays which may unnecessarily prevent those trains keeping to schedule, e.g. when none or only a few of the other trains running at a given time on a given electrical power supply section have shorter delays.

Examples of delayed reconnection of trains are known from JP 2011 111137, CN 101746285, JP 2017 055500.

### Summary

According to a first aspect of the invention, as defined by the appended claims, there is provided a reconnection system for reconnecting electrically powered train units to electrical power supply lines which extend along respective tracks of a rail network, the network being divided into plural power supply sections with each power supply section having a respective source of electrical power for the supply lines of the tracks in that section, the reconnection system including:
plural of the train units, each unit having a measuring device to detect failure and recovery of power supply by the supply line of the track on which the unit is currently located, a breaker to disconnect and reconnect traction equipment of the unit with the supply line, and a supervision system which is operably connected to the measuring device and the breaker; and
a delay generating system which is configured to extemporaneously determine a respective and different breaker closing time within a given power supply section for each of the train units on recovery of the power supply to the train units, and to provide the supervision systems of the train units with the respective breaker closing times thus-determined;
wherein each supervision system is programed to:
   command its breaker to disconnect its traction equipment when its measuring device detects failure of the power supply; and
   after detection by the measuring device of recovery of the power supply, command the breaker to reconnect the traction equipment according to the breaker closing time for its train unit provided by the delay generating system;
   whereby a breaker closing time delay at which any given one of the breakers is commanded to reconnect its traction equipment varies as between disconnection and reconnection events.

Advantageously, by setting the time delays for each train unit extemporaneously, using the delay generating system, they are not fixed for a given train unit as between disconnection and reconnection events, making is possible to set more optimal breaker closing times, such that the imposition of relatively long delays on train units can be avoided.

According to a first option for the reconnection system, the breaker closing times can be determined at a central location, remote from the train units. For example, each train unit may further have a wireless communication device to which its supervision system is also operably connected, and the delay generating system may be a track-side control system which wirelessly communicates with the wireless communication devices of the train units, whereby the track-side control system can extemporaneously determine the breaker closing times for the train units on receipt of resume request signals transmitted by the wireless communication devices of the train units, the resume request signals also identifying the respective units, and whereby the breaker closing times thus-determined can be transmitted as reconnection command signals to the train units via their wireless communication devices. Conveniently, the resume request signals can be sent when the respective train units' power supplies have failed or have been recovered. The closing times may conveniently have a predetermined time delay therebetween. The predetermined time delay may be at least 20 ms.

In such a reconnection system, the track-side control system may be further configured to: determine the locations of the train units on the network; and determine from the resume request signals and the locations of the train units on the network the identities of those train units within each power supply section which have transmitted resume request signals; whereby the respective and different breaker closing times are determined by the track-side control system for each power supply section on a section-by-section basis. Thus rather than determining the breaker closing times on a whole network basis, which can result in longer than necessary closing time delays, by determining the times on a section-by-section basis overall shorter closing time delays can be achieved because different trains on different sections can share the same or similar time delays.

In one approach according to the first option, each supervision system may transmit the resume request signal to the track-side control system using the train unit's wireless communication device only on detection by the measuring device of recovery of the power supply. In this approach, each supervision system may be further programed to send an acknowledgement signal to the track-side control system using the train unit's wireless communication device after receipt by the wireless communication device of the reconnection command signal. The track-side control system may then be further programed to successively transmit the respective reconnection command signals to the identified train units within each power supply section, each succeeding reconnection command signal being transmitted after receipt of the acknowledgement signal transmitted by the train unit in response to the previous reconnection command signal for that power supply section. The use of acknowledgement signals in this way allows the system to accommodate unexpected delays in train unit reconnections.

However, in another approach according to the first option, each supervision system may transmit the resume request signal to the track-side control system on detection by the measuring device of failure of the power supply, e.g. at the same time as commanding the breaker to disconnect the traction equipment. The track-side control system can then transmit the respective reconnection command signals to the identified train units, each signal providing the respective breaker closing time as a respective predetermined time delay, which is stored by the respective supervision system. Thereafter, on detection by its measuring device of recovery of the power supply (which detection will generally occur at the same time for all the train units in a given power supply section), the supervision system can command its breaker to reconnect the traction equipment according to the stored predetermined time delay.

Also provided is the track-side control system of the first option for the reconnection system. For example, the track-side control system may be configured to: wirelessly communicate with the wireless communication devices of the train units; extemporaneously determine respective and different breaker closing times for the train units on receipt of resume request signals transmitted by the wireless communication devices of the train units and also identifying the respective units, and transmit the breaker closing times thus-determined as reconnection command signals to the train units via their wireless communication devices.

The reconnection system of the first option requires communication between the supervision system of a given train unit and the track-side control system. However, if this is not available (e.g. due a train unit being in a tunnel, or for other reasons), it is still desirable to be able to reconnect units without excessive delays.

Accordingly, in a second option for the reconnection system, each train unit further has a respective location detection device to detect the current location of the train unit, the supervision system of that unit being operably connected to the location detection device; and the supervision system of each train unit stores a respective look-up table which identifies (i) the power supply sections, and (ii) track blocks which are subdivisions of the tracks of each power supply section, only one train unit being allowed in each track block at any given time, the look-up table further associating the track blocks of each power supply section with a respective and different time delay. The delay generating system then comprises the location detection devices and the look-up tables of the supervision systems. Moreover, each supervision system of each train unit can be programed to: identify the current track block on the basis of the current location of the train unit detected by the location detection device; determine from its look-up table the time delay associated with the current track block; and command the breaker to reconnect the traction equipment after passage of the determined time delay timed from when the measuring device detects recovery of the power supply. Advantageously, by having such a look-up table stored by each train unit's supervision system, the unit can set its own delay time for reconnection without reference to an external, track-side control system. The time delays of the track blocks of each power supply section may differ from each other by at least 20 ms.

Also provided is one of the train units of the second option for the reconnection system. For example, such a train unit has a measuring device to detect failure and recovery of power supply by the supply line of the track on which the unit is currently located, a breaker to disconnect and reconnect traction equipment of the unit with the supply line, a location detection device to detect the current location of the train unit, and a supervision system which is operably connected to the measuring device, the breaker and the location detection device, the supervision system storing a look-up table which identifies (i) the power supply sections, and (ii) track blocks which are subdivisions of the tracks of each power supply section, only one train unit being allowed in each track block at any given time, the look-up table further associating the track blocks of each power supply section with a respective and different time delay. The supervision system of such a train unit can be programed to: command the breaker to disconnect the traction equipment when the measuring device detects failure of the power supply; identify the current track block on the basis of the current location of the train unit detected by the location detection device; determine from its look-up table the time delay associated with the current track block; and command the breaker to reconnect the traction equipment after passage of the determined time delay timed from when the measuring device detects recovery of the power supply. Thus, a breaker closing time delay at which the breaker is commanded to reconnect the traction equipment varies as between disconnection and reconnection events for the train unit.

According to a second aspect of the invention, as defined by the appended claims, there is provided a method for reconnecting electrically powered train units to electrical power supply lines which extend along respective tracks of a rail network, the network being divided into plural power supply sections with each power supply section having a respective source of electrical power for the supply lines of the tracks in that section, and wherein each train unit has a measuring device to detect failure and recovery of power supply by the supply line of the track on which the unit is currently located, a breaker to disconnect and reconnect traction equipment of the unit with the supply line, and a supervision system which is operably connected to the measuring device and the breaker;
the method including:
the supervision systems of the train units commanding the train units' breakers to disconnect the train units' traction equipment when the train units' measuring devices detect failure of the power supply;
extemporaneously determining a respective and different breaker closing time for each of the train units within a given power supply section on recovery of the power supply to the train units;
providing the supervision systems of the train units with the respective breaker closing times thus-determined; and
the supervision systems of the train units commanding their breakers, after detection by their measuring devices of recovery of the power supply, to reconnect their traction equipment according to the respective breaker closing times thus-provided;
whereby a breaker closing time delay at which any given one of the train units reconnects its traction equipment after recovery of the power supply varies as between disconnection and reconnection events.

Thus the method of the second aspect corresponds to the system of the first aspect. Accordingly, optional features of the system of the first aspect pertain also to the method of the second aspect.

For example, consistent with the first option described above, each train unit may further have a wireless communication device to which its supervision system is also operably connected. The method may then include: the wireless communication devices transmitting resume request signals to a track-side control system, the resume request signals identifying the respective units; the track-side control system extemporaneously determining the breaker closing times for the train units on receipt of the resume request signals; and the track-side control system transmitting the breaker closing times thus-determined as reconnection command signals to the train units via their wireless communication devices.

Alternatively, consistent with the second option described above, each train unit may further have a respective location detection device to detect the current location of the train unit, the supervision system of that unit being operably connected to the location detection device. In addition, the supervision system of each train unit may store a respective look-up table which identifies (i) the power supply sections, and (ii) track blocks which are subdivisions of the tracks of each power supply section, only one train unit being allowed in each track block at any given time, the look-up table further associating the track blocks of each power supply section with a respective and different time delay. The extemporaneous determination of the respective and different breaker closing time for each of the train units can then be performed by the supervision system of each train unit: identifying the current track block on the basis of the current location of the train unit detected by the location detection device, and determining from its look-up table the time delay associated with the current track block, whereby the supervision system of each train unit reconnects the traction equipment after passage of the determined time delay timed from when the measuring device detects recovery of the power supply.

In each of the above aspects, if the train units have more than one breaker (e.g. because they have more than one pantograph), then each breaker of each train unit can have its own time delay, such that the closing times are still successive and have a predetermined time delay therebetween. In this way, within a given train unit, as well as between the train units of a given power supply section, the breakers can be prevented from closing at the same time. Thus when there is communication between the supervision systems and the track-side control system (e.g. in the first option above), information on the number of breakers in a given train unit can be included in the respective resume request signals. Additionally or alternatively, the track-side control system may obtain this information from other sources, such as from a train detection system used by rail traffic controllers to direct movement of trains. However, when communication between the supervision systems and the track-side control system is not available (e.g. in the second option above), the look-up tables stored in the supervision systems may assume a worse-case scenario in which each track block of each power supply section is associated with plural respective and different time delays based on a train unit with the maximum number of breakers being in that track block.

### Brief description of the drawings

Embodiments will now be described by way of example only, with reference to the Figures, in which:
Figure 1 shows schematically a system for reconnecting electrically powered train units to electrical power supply lines;
Figure 2 shows schematically a train unit of the system of Figure 1;
Figure 3 shows a control flow chart of operations performed by a supervision system of the train unit of Figure 2;
Figure 4 shows a control flow chart of operations performed by a track-side control system of the system of Figure 1;
Figure 5 shows an example look-up table correlating track blocks and power supply sections;

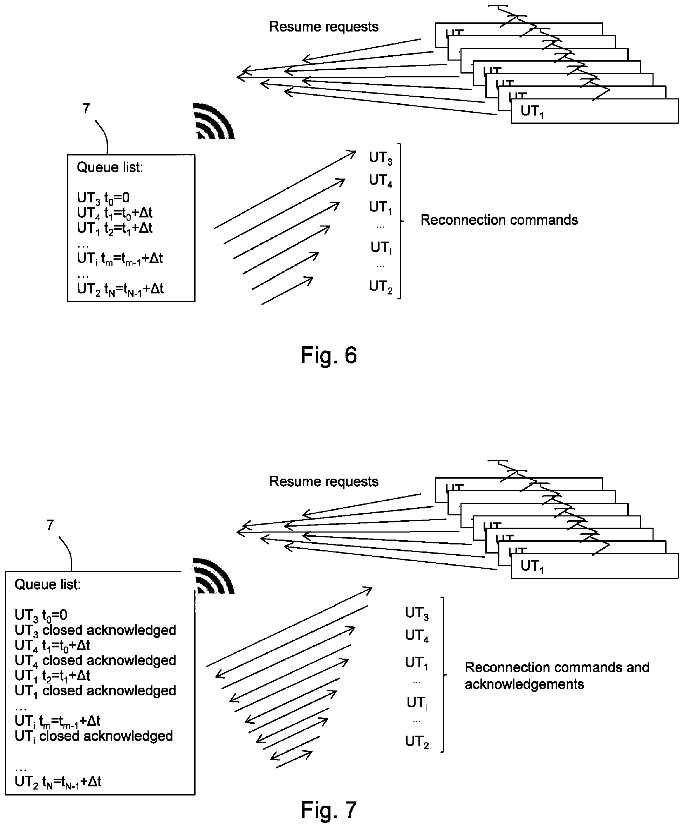

Figure 6 shows schematically the use of resume requests, a queue list created by the track-side control system, and reconnection commands;
Figure 7 shows a similar schematic to that of Figure 6, but including acknowledgement signals;
Figure 8 shows an example look-up table correlating track blocks and breaker closing time delays; and
Figure 9 shows a control flow chart of a variant set of operations performed by the supervision system of the train unit of Figure 2.

### Detailed description

Aspects and embodiments of the present disclosure will now be discussed with reference to the accompanying figures.

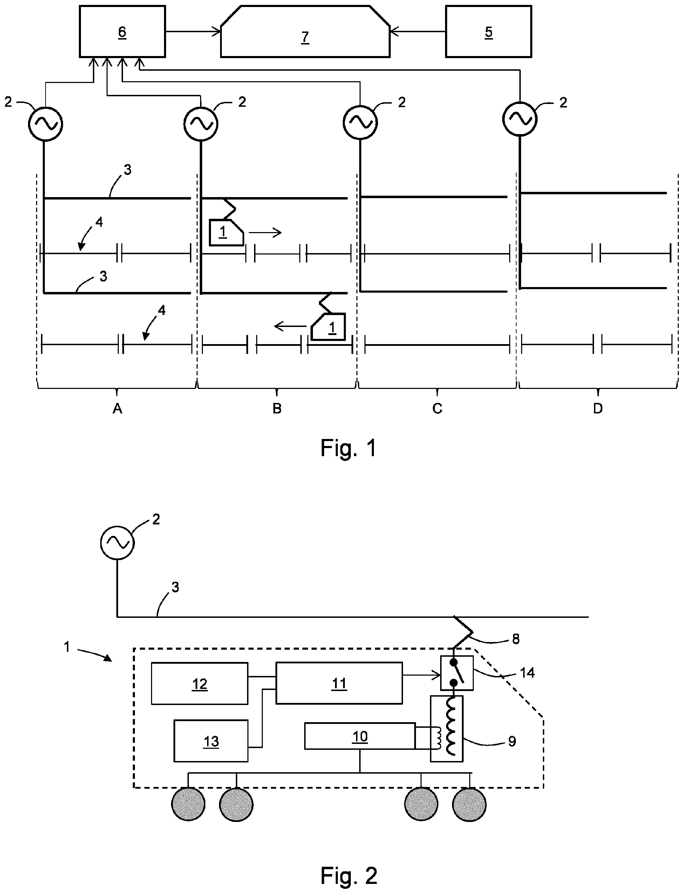

Figure 1 shows schematically a system for reconnecting electrically powered train units to electrical power supply lines.

Each train unit 1 runs on a rail track 4 of a rail network using the electric power received from a power source 2 (e.g. a substation) via an overhead electric power supply line 3 extending along that track. The network is divided into plural power supply sections A-D, with the tracks in each section normally being separated from the tracks in adjacent sections by short lengths of neutral (unpowered) track, the positions of which are indicated in Fig. 1 by vertical dashed lines. In the example of Fig.1 the network is shown having two parallel up and down lines (running directions indicated by arrows), and with four power supply sections. Thus each power supply section has two parallel tracks and the respective power supply lines for those tracks, although in general, each power supply section can have any number of tracks and associated supply lines. In addition, each track is divided into a number of track blocks or cantons, which are signalling protected areas in which only one train can run at any one time. If the boundaries between signalling protected areas do not match up with the boundaries between power supply sections, then any single signalling protected area which crosses the boundary between power supply sections can simply be considered as two track blocks, one on either side of the boundary. In Fig. 1 the boundaries between track blocks are indicated by two short, parallel vertical lines. Thus power supply section A is shown with up direction and down direction tracks, each having two track blocks, making 4 blocks in total designated A1-A4. Similarly, power section B has six track blocks B1-B6, section C has two track blocks C1-C2, and section D has four track blocks D1-D4.

Suitable train detection devices are provided to detect whether a train is located within a block. For example, track circuit devices may be provided which detect the presence of a train by its influence on an electric signal transmitted around the rail circuit, or check in/check out devices may be arranged at the borders of the blocks. Such devices are part of a train detection system 5, which may be of known type and is typically used by rail traffic controllers to direct movement of trains. The train detection system creates train location information based on the train units detected by train detection devices.

A power control centre 6 communicates with the power sources 2 arranged along with the track and receives the operation statuses of these power source.

A track-side control system 7 has a communication device to communicate wirelessly with each train unit 1 on the tracks 4. The control system also receives operation status information of the power sources 2 from the power control centre 6 and location information of the units from the train detection system 5.

Figure 2 shows schematically an example train unit 1. Each train unit has a power collector 8, such as a pantograph, to collect electric power from the power supply line 3, a transformer 9 to step down the voltage collected from the supply line, traction equipment 10 to receive power from the transformer and provide power to one or more motors, a measuring device (not shown) to measure the voltage of the power collected by the power collector, and a location detection device 12 to detect the train unit's location. The location detection device can makes us of, for example, GPS and/or odometry. The train unit also has a breaker 14, such as a VCB, between the power collector and the transformer to electrically disconnect and reconnect the transformer, and hence the from the power collection device, from the supply line.

In addition, the train unit has a supervision system 11 which is operably connected with the measuring device, the breaker 14 and the location detection device 12, and also with a wireless communication device 13 in order to perform wireless communication with the track-side control system 7. The train supervision system commands the breaker 14 to disconnect or reconnect to the power supply line 3 based on a reconnection command signal received from the control system and the voltage of the collected power. The supervision system can be part of a wider train control and management system (TCMS) or traction control unit (TCU).

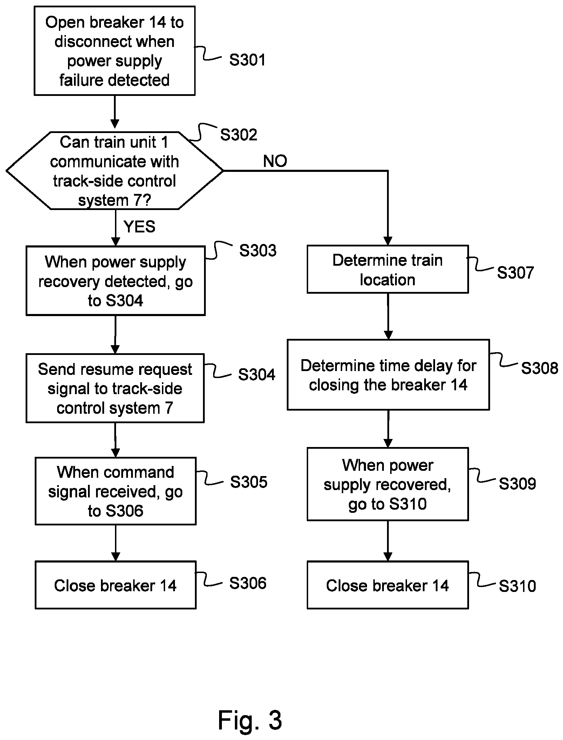

Figure 3 shows a control flow chart of operations performed by the supervision system 11 for reconnecting the train unit 1 to the electrical power supply line 3. In the case where communication is maintained between the train unit and the track-side control system 7, the following left side operations S301-S306 are performed:

| | |
|---|---|
| S301: | When the measuring device detects failure of the of the power supply by the measured voltage value being outside of a predetermined range, the supervision system 11 flags the power supply as abnormal and commands the breaker 14 to open to disconnect the traction equipment 10 from the supply line 3. |
| S302: | The supervision system 11 checks whether the wireless communication device 13 maintains communication with the control system 7 or not. If communication is maintained the supervision system goes to S303 of the operations. If the |
| | communication is lost, the control flow branches to S307 and the right side operations S307-S310 (discussed later). |
| S303: | The supervision system 11 checks the voltage signal measured by its voltage measuring device and if the voltage has returned to within the predetermined range flags the power supply line as normal and goes to S304. |
| S304: | The supervision system 11 sends a resume request signal via the wireless communication device requesting approval from the control system 7 to close the breaker. The resume request signal also identifies the train unit making the request. |
| S305: | The supervision system 11 waits for a reconnection command signal from the control system 7, the supervision system going to S306 on receipt of the command signal. |
| S306: | The supervision system 11 commands the breaker 14 to close according to the signal from the control system 7. If the reconnection command signal from the control system includes closing timing information, the supervision system controls the closing of the breaker according to that information. |

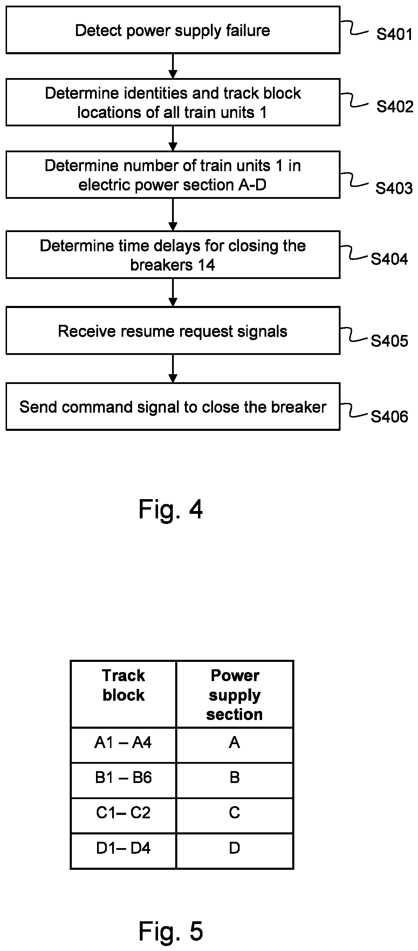

The track-side control system 7 creates the reconnection command signal for each train, and thus functions as an external delay generating system for the train units 1. Figure 4 shows a control flow chart of operations performed by the control system 7 for reconnecting the train units 1 to the electrical power supply lines 3 in order to effect reconnection delay control. In particular, the following operations S401-S406 are performed:

| | |
|---|---|
| S401: | The control system 7 confirms that the power supply has failed by receiving an abnormal status signal from the power control centre 6. |
| S402: | The control system 7 determines the locations and identities of the train units 1 in the track blocks based on location information received from the train detection system 5. Additionally or alternatively, the control system 7 determines the locations and identities of the train units based on location information received directly from each train unit via its location detection device 12 and its communication device 13. |
| S403: | The control system 7 then determines the identities and number of train units in each power supply section A-D based on a stored look-up table, an example being shown in Figure 5, which correlates track blocks and power supply sections. |
| S404: | The control system 7 creates a closing time delay for each train unit 1 in a given power supply section based on the number of train units located in that section, so that the timings for closing the breakers of the train units have a predetermined minimum time delay Δt therebetween. Depending on the power supply infrastructure, the power consumption characteristics of the train units, and the need to prevent superposition of inrush currents, a typical time delay can be anything from 20 millliseconds to 10 seconds. Thus, for example, in a situation with four train units with IDs UT₁, UT₂, UT₃ and UT₄ in a given power supply section, and a predetermined minimum time delay of 5 seconds, the control system 7 can create time delays of UT₃ = 0 sec, UT₄ = 5 sec, UT₁ = 10 sec and UT₂ = 15s sec. |
| S405 | The control system 7 receives the resume request signals from train units 1. |
| S406: | The control system 7 sends a breaker close, reconnection command signal with the closing time delay created in S404 to the train units. Conveniently, the control system can create a queue list as shown schematically in Figure 6, and send each breaker close command signal to each train unit UTᵢ (where i = 1 to N, N being the number of train units within a given power supply section) applying the time delay Δt between each transmission. A variation of this approach is to wait for an acknowledgement signal from each train unit confirming receipt of its reconnection command signal before the control system sends the next reconnection command signal in the queue, as shown schematically in Figure 7. In this way, confidence can be increased that the previous breaker has closed before the next breaker is commanded to close. In particular, the use of acknowledgements allows the system to accommodate unexpected holdups in train unit reconnections. |

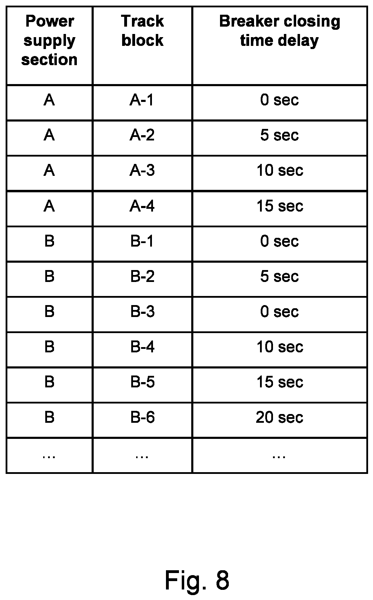

The approach to train unit reconnection discussed above requires communication between the train units 1 and the track-side control system 7 (external delay generating system). If this communication is lost, non-existent, or unstable, a different approach can be used. In particular, the supervision system 11 of each train unit can have a look-up table, an example being shown in Figure 8, which associates the track blocks of each power supply section A-D with a respective and different time delay. Referring to Figure 3, the following right side operations S307-S310 are then performed by the supervision system if, at step S302, its wireless communication device 13 loses communication with the control system 7:

| | |
|---|---|
| S307 | The supervision system 11 receives location information (e.g. based on GPS and/or odometry) from the location detection device 12 to determine the current track block of the train unit 1. |
| S308: | The supervision system 11 determines from its look-up table (e.g. Figure 8) the time delay associated with its current track block. |
| S309: | The supervision system 11 checks the voltage signal measured by its voltage measuring device and if the voltage is within the predetermined range, the supervision system flags the power supply as normal. |
| S310: | The supervision system 11 then commands the breaker 14 to close to reconnect the traction equipment 10 to the supply line 3 according to the time delay determined in S308. |

Thus, as each train unit 1 in a given power supply section applies a respective and different time delay on the basis of its current track block location and the look-up table, it is still possible to reconnect the traction equipment of the train units without superposing their inrush currents. Effectively the train units form their own distributed, internal delay generating system comprising the look-up tables of the supervision systems 11 and the location detection devices 12. The train units can switch to this internal delay generating system if communication with the track-side control system 7 is not established within a specified time period. Accordingly, the supervision system 11 of each unit can have a timer to determine when that period has been exceeded.

Returning to reconnection based on communication between the train units 1 and the track-side control system 7 (i.e. operation of left side of Figure 3 and Figure 4), the approach can be modified to account for moving block control, where instead of static track blocks which are fixed relative to the track infrastructure, the protected areas in which only one train can run at any one time move with a given train unit and vary in size dependent on the speed of that unit. In this case, the track-side control system 7 can simply determine the identities and number of train units in each power supply section A-D from the location information received from the train detection system 5 and/or from location information received directly from the train units, i.e. without the intermediary of the fixed track blocks. If communication between the train units 1 and the track-side control system 7 is lost, it is possible to switch to the right side operations S307-S310 of Figure 3 with static track blocks.

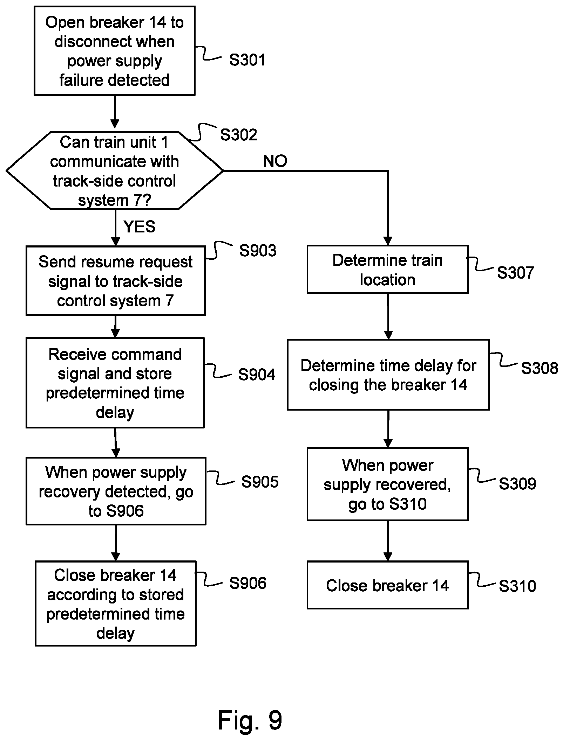

Figure 9 shows a control flow chart of a variant set of operations performed by the supervision system 11 for reconnecting the train unit 1 to the electrical power supply line 3. Operations S301, S302 and S307-S310 are the same as for the control flow chart of Figure 3. However, in the case where communication is maintained between the train unit and the track-side control system 7, in the variant, the following left side operations S301, S302 and S903-S906 are performed:

| | |
|---|---|
| S301: | When the measuring device detects failure of the of the power supply by the measured voltage value being outside of a predetermined range, the supervision system 11 flags the power supply as abnormal and commands the breaker 14 to open to disconnect the traction equipment 10 from the supply line 3. |
| S302: | The supervision system 11 checks whether the wireless communication device 13 maintains communication with the control system 7 or not. If communication is maintained the supervision system goes to S903 of the operations. If the communication is lost, the control flow branches to S307 and the right side operations S307-S310. |
| S903: | The supervision system 11 sends a resume request signal via the wireless communication device requesting a predetermined time delay from the control system 7 to use to close the breaker when the voltage signal measured by its voltage measuring device has returned to within the predetermined range. The resume request signal also identifies the train unit making the request. |
| S904: | The supervision system 11 receives the reconnection command signal from the control system 7, and stores the predetermined time delay included in the signal. |
| S905: | The supervision system 11 checks the voltage signal measured by its voltage measuring device and if the voltage has returned to within the predetermined range flags the power supply line as normal and goes to S906. |
| S906: | The supervision system 11 commands the breaker 14 after applying the stored predetermined time delay. |

The corresponding operations performed by the control system 7 are the same as those described above in respect of the control flow chart of Figure 4, except that in operation S406 the reconnection command signals include the respective time delays Δt, and these signals can all be transmitted to the train units at the same time.

The variant operations rely on the train units 1 in a given power supply section A-D flagging the power supply line as normal in operation S905 at about the same time (or at least at a timescale which is significantly shorter than the timescale of the reconnection delay control) so that implementation of the stored predetermined time delays produce the desired spacings between closing times of the breakers 14. However, in general, this is not a problem as measurement of the power supply voltage can be performed reliably and quickly, and moreover all the train units in a given power supply section effectively experience the same power supply voltage. An advantage of the variant operations is that overall reconnection delays can be further reduced.

It will be understood that the invention, which is defined by the appended claims, 2. is not limited to the embodiments above-described and various modifications and improvements can be made without departing from the scope of the claims.

Also, it is noted that embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

## Claims

1. A reconnection system for reconnecting electrically powered train units (1) to electrical power supply lines (3) which extend along respective tracks (4) of a rail network, the network being divided into plural power supply sections (A-D) with each power supply section having a respective source (2) of electrical power for the supply lines of the tracks in that section, the reconnection system including:
plural of the train units (1), each unit having a measuring device to detect failure and recovery of power supply by the supply line of the track on which the unit is currently located, a breaker (14) to disconnect and reconnect traction equipment (10) of the unit with the supply line, and a supervision system (11) which is operably connected to the measuring device and the breaker; the reconnection system **characterized by**:
a delay generating system which is configured to extemporaneously determine a respective and different breaker closing time for each of the train units within a given power supply section on recovery of the power supply to the train units (1), and to provide the supervision systems (11) of the train units with the respective breaker closing times thus-determined;
wherein each supervision system (11) is programed to:
command its breaker (14) to disconnect its traction equipment (10) when its measuring device detects failure of the power supply; and
after detection by the measuring device of recovery of the power supply, command the breaker (14) to reconnect the traction equipment (10) according to the breaker closing time for its train unit (1) provided by the delay generating system;
whereby a breaker closing time delay at which any given one of the breakers (14) is commanded to reconnect its traction equipment (10) varies as between disconnection and reconnection events.

2. The reconnection system according to claim 1, wherein each train unit (1) further has a wireless communication device (13) to which its supervision system (11) is also operably connected, and the delay generating system is a track-side control system (7) which wirelessly communicates with the wireless communication devices of the train units, whereby the track-side control system extemporaneously determines the breaker closing times for the train units on receipt of resume request signals transmitted by the wireless communication devices of the train units, the resume request signals also identifying the respective units, and whereby the breaker closing times thus-determined are transmitted as reconnection command signals to the train units via their wireless communication devices.

3. The reconnection system according to claim 2, wherein the track-side control system (7) is further configured to:
determine the locations of the train units (1) on the network; and
determine from the resume request signals and the locations of the train units (1) on the network the identities of those train units within each power supply section (A-D) which have transmitted resume request signals;
whereby the respective and different breaker closing times are determined by the track-side control system for each power supply section on a section-by-section basis.

4. The reconnection system according to claim 2 or 3,
wherein each supervision system (11) is further programed to: transmit the resume request signal to the track-side control system (7) only on detection by the measuring device of recovery of the power supply; and send an acknowledgement signal to the track-side control system (7) using the train unit's wireless communication device (13) after receipt by the wireless communication device of the reconnection command signal; and
wherein the track-side control system (7) is further configured to successively transmit the respective reconnection command signals to the identified train units (1) within each power supply section (A-D), each succeeding reconnection command signal being transmitted after receipt of the acknowledgement signal transmitted by the train unit in response to the previous reconnection command signal for that power supply section.

5. The reconnection system according to claim 2 or 3, wherein:
each supervision system (11) is further programed to transmit the resume request signal to the track-side control system (7) on detection by the measuring device of failure of the power supply;
the reconnection command signals provide the breaker closing times as respective predetermined time delays;
each supervision system (11) is further programed to store the respective predetermined time delay; and
on detection by its measuring device of recovery of the power supply, each supervision system (11) commands its breaker (14) to reconnect the traction equipment (10) according to the stored predetermined time delay.

6. The track-side control system (7) of the reconnection system of any one of claim 2 to 5.

7. The reconnection system of any one of claims 1 to 6, wherein the predetermined time delay is at least 20 ms.

8. The reconnection system according to claim 1, wherein:
each train unit (1) further has a respective location detection device (12) to detect the current location of the train unit (1), the supervision system (11) of that unit being operably connected to the location detection device (12); and
the supervision system (11) of each train unit stores a respective look-up table which identifies (i) the power supply sections (A-D), and (ii) track blocks which are subdivisions of the tracks (4) of each power supply section, only one train unit being allowed in each track block at any given time, the look-up table further associating the track blocks of each power supply section (A-D) with a respective and different time delay;
wherein the delay generating system comprises the location detection devices (12) and the look-up tables of the supervision systems (11); and
wherein each supervision system (11) of each train unit is programed to:
identify the current track block on the basis of the current location of the train unit (1) detected by the location detection device (12);
determine from its look-up table the time delay associated with the current track block; and
command the breaker (14) to reconnect the traction equipment (10) after passage of the determined time delay timed from when the measuring device detects recovery of the power supply.

9. The reconnection system of claim 8, wherein the time delays of the track blocks of each power supply section differ from each other by at least 20 ms.

10. One of the train units (1) of the reconnection system of claim 8 or 9.

11. A method for reconnecting electrically powered train units (1) to electrical power supply lines (3) which extend along respective tracks (4) of a rail network, the network being divided into plural power supply sections (A-D) with each power supply section having a respective source (2) of electrical power for the supply lines of the tracks in that section, and each train unit (1) having a measuring device to detect failure and recovery of power supply by the supply line of the track on which the unit is currently located, a breaker (14) to disconnect and reconnect traction equipment (10) of the unit with the supply line, and a supervision system (11) which is operably connected to the measuring device and the breaker;
the method including:
the supervision systems (11) of the train units (1) commanding the train units' breakers (14) to disconnect the train units' traction equipment (10) when the train units' measuring devices detect failure of the power supply;
the method **characterized by** the steps of:
extemporaneously determining a respective and different breaker closing time for each of the train units (1) within a given power supply section (A-D) on recovery of the power supply to the train units;
providing the supervision systems (11) of the train units (1) with the respective breaker closing times thus-determined; and
the supervision systems (11) of the train units (1) commanding their breakers (14), after detection by their measuring devices of recovery of the power supply, to reconnect their traction equipment (10) according to the respective breaker closing times thus-provided;
whereby a breaker closing time delay at which any given one of the train units (1) reconnects its traction equipment after recovery of the power supply varies as between disconnection and reconnection events.

12. The method of claim 11, wherein each train unit (1) further has a wireless communication device (13) to which its supervision system (11) is also operably connected, and wherein the method includes:
the wireless communication devices (13) transmitting resume request signals to a track-side control system (7), the resume request signals identifying the respective units;
the track-side control system (7) extemporaneously determining the breaker closing times for the train units on receipt of the resume request signals; and
the track-side control system (7) transmitting the breaker closing times thus-determined as reconnection command signals to the train units (1) via their wireless communication devices (13).

13. The method of claim 11, wherein each train unit (1) further has a respective location detection device (12) to detect the current location of the train unit (1), the supervision system (11) of that unit being operably connected to the location detection device (12); wherein the supervision system (11) of each train unit stores a respective look-up table which identifies (i) the power supply sections (A-D), and (ii) track blocks which are subdivisions of the tracks (4) of each power supply section, only one train unit being allowed in each track block at any given time, the look-up table further associating the track blocks of each power supply section (A-D) with a respective and different time delay; and wherein the extemporaneous determination of the respective and different breaker closing time for each of the train units (1) is performed by the supervision system (11) of each train unit (1): identifying the current track block on the basis of the current location of the train unit (1) detected by the location detection device (12), and determining from its look-up table the time delay associated with the current track block, whereby the supervision system (11) of each train unit (1) reconnects the traction equipment (10) after passage of the determined time delay timed from when the measuring device detects recovery of the power supply.

## Patentansprüche

1. Wiederverbindungssystem zum Wiederverbinden von elektrisch angetriebenen Zugeinheiten (1) mit elektrischen Leistungsversorgungsleitungen (3), die sich entlang entsprechender Gleise (4) eines Schienennetzes erstrecken, wobei das Netz in mehrere Leistungsversorgungsabschnitte (A-D) unterteilt ist, wobei jeder Leistungsversorgungsabschnitt eine entsprechende Quelle (2) elektrischer Leistung für die Versorgungsleitungen der Gleise in diesem Abschnitt aufweist, wobei das Wiederverbindungssystem Folgendes umfasst:
mehrere Zugeinheiten (1), wobei jede Einheit eine Messvorrichtung aufweist, um eine Störung und Wiederherstellung der Leistungsversorgung durch die Versorgungsleitung des Gleises zu detektieren, auf dem sich die Einheit zu dem Zeitpunkt befindet, einen Trennschalter (14), um eine Traktionseinrichtung (10) der Einheit von der Versorgungsleitung zu trennen oder wieder damit zu verbinden, und ein Überwachungssystem (11), das mit der Messvorrichtung und dem Trennschalter wirkverbunden ist; wobei das Wiederverbindungssystem durch Folgendes gekennzeichnet ist:
ein Verzögerungserzeugungssystem, das ausgelegt ist, um spontan eine entsprechende und unterschiedliche Trennschalter-Schließzeit für jede der Zugeinheiten innerhalb eines bestimmten Leistungsversorgungsabschnitts bei Wiederherstellung der Leistungsversorgung für die Zugeinheiten (1) zu bestimmen und um den Überwachungssystemen (11) der Zugeinheiten die derart bestimmten entsprechenden Trennschalter-Schließzeiten bereitzustellen;
wobei jedes Überwachungssystem (11) programmiert ist, um:
seinem Trennschalter (14) zu befehlen, die Traktionseinrichtung (10) zu trennen, wenn die Messvorrichtung eine Störung der Leistungsversorgung detektiert; und
dem Trennschalter (14) nach der Detektion der Wiederherstellung der Leistungsversorgung durch die Messvorrichtung zu befehlen, die Traktionseinrichtung (10) gemäß der Trennschalter-Schließzeit für ihre Zugeinheit (1), die von dem Verzögerungserzeugungssystem bereitgestellt wird, wieder zu verbinden;
wobei eine Trennschalter-Schließzeitverzögerung, bei der einem beliebigen der Trennschalter (14) befohlen wird, die Traktionseinrichtung (10) wieder zu verbinden, zwischen Trenn- und Wiederverbindungsereignissen variiert.

2. Wiederverbindungssystem nach Anspruch 1, wobei jede Zugeinheit (1) außerdem eine drahtlose Kommunikationsvorrichtung (13) aufweist, mit der das Überwachungssystem (11) ebenfalls wirkverbunden ist, und das Verzögerungserzeugungssystem ein gleisseitiges Steuersystem (7) ist, das drahtlos mit den drahtlosen Kommunikationsvorrichtungen der Zugeinheiten kommuniziert, wobei das gleisseitige Steuersystem beim Empfang von Fortsetzungsanfragesignalen, die von den drahtlosen Kommunikationsvorrichtungen der Zugeinheiten übertragen werden, spontan die Trennschalter-Schließzeiten für die Zugeinheiten bestimmt, wobei die Fortsetzungsanfragesignale auch die entsprechenden Einheiten identifizieren und wobei die derart bestimmten Trennschalter-Schließzeiten als Wiederverbindungsbefehlssignale über ihre drahtlosen Kommunikationsvorrichtungen an die Zugeinheiten übertragen werden.

3. Wiederverbindungssystem nach Anspruch 2, wobei das gleisseitige Steuersystem (7) außerdem ausgelegt ist, um:
die Standorte der Zugeinheiten (1) auf dem Netz zu bestimmen; und
aus den Fortsetzungsanfragesignalen und den Standorten der Zugeinheiten (1) auf dem Netz die Identitäten jener Zugeinheiten innerhalb jedes Leistungsversorgungsabschnitts (A-D) zu bestimmen, die Fortsetzungsanfragesignale übertragen haben;
wobei die entsprechenden und unterschiedlichen Trennschalter-Schließzeiten von dem gleisseitigen Steuersystem für jeden Leistungsversorgungsabschnitt Abschnitt für Abschnitt bestimmt werden.

4. Wiederverbindungssystem nach Anspruch 2 oder 3,
wobei jedes Überwachungssystem (11) außerdem programmiert ist, um: das Fortsetzungsanfragesignal nur bei Detektion der Wiederherstellung der Leistungsversorgung durch die Messvorrichtung an das gleisseitige Steuersystem (7) übertragen wird; und ein Bestätigungssignal unter Verwendung der drahtlosen Kommunikationsvorrichtung (13) der Zugeinheit an das gleisseitige Steuersystem (7) zu senden, nachdem das Wiederverbindungsbefehlssignal von der drahtlosen Kommunikationsvorrichtung empfangen wurde; und
wobei das gleisseitige Steuersystem (7) außerdem ausgelegt ist, um die entsprechenden Wiederverbindungsbefehlssignale nacheinander an die identifizierten Zugeinheiten (1) innerhalb jedes Leistungsversorgungsabschnitts (A-D) zu übertragen, wobei jedes nachfolgende Wiederverbindungsbefehlssignal nach dem Empfang des Bestätigungssignals übertragen wird, das von der Zugeinheit als Antwort auf das vorhergehende Wiederverbindungsbefehlssignal für diesen Leistungsversorgungsabschnitt übertragen wurde.

5. Wiederverbindungssystem nach Anspruch 2 oder 3, wobei:
jedes Überwachungssystem (11) außerdem programmiert ist, um das Fortsetzungsanfragesignal bei Detektion einer Störung der Leistungsversorgung durch die Messvorrichtung an das gleisseitige Steuersystem (7) zu übertragen;
die Wiederverbindungsbefehlssignale die Trennschalter-Schließzeiten als entsprechende vorbestimmte Zeitverzögerungen bereitstellen;
jedes Überwachungssystem (11) außerdem programmiert ist, um die entsprechende vorbestimmte Zeitverzögerung zu speichern; und
jedes Überwachungssystem (11) bei der Detektion der Wiederherstellung der Leistungsversorgung durch die Messvorrichtung seinem Trennschalter (14) befiehlt, die Traktionseinrichtung (10) gemäß der gespeicherten vorbestimmten Zeitverzögerung wieder zu verbinden.

6. Gleisseitiges Steuersystem (7) eines Wiederverbindungssystems nach einem der Ansprüche 2 bis 5.

7. Wiederverbindungssystem nach einem der Ansprüche 1 bis 6, wobei die vorbestimmte Zeitverzögerung zumindest 20 ms beträgt.

8. Wiederverbindungssystem nach Anspruch 1, wobei:
jede Zugeinheit (1) außerdem eine entsprechende Standortdetektionsvorrichtung (12) aufweist, um den aktuellen Standort der Zugeinheit (1) zu detektieren, wobei das Überwachungssystem (11) dieser Einheit mit der Standortdetektionsvorrichtung (12) wirkverbunden ist; und
das Überwachungssystem (11) jeder Zugeinheit eine entsprechende Nachschlagtabelle speichert, die (i) die Leistungsversorgungsabschnitte (A-D) und (ii) Gleisblöcke identifiziert, die Unterteilungen der Gleise (4) jedes Leistungsversorgungsabschnitts darstellen, wobei nur eine Zugeinheit in jedem Gleisblock zu einem bestimmten Zeitpunkt erlaubt ist, wobei die Nachschlagtabelle außerdem die Gleisblöcke jedes Leistungsversorgungsabschnitts (A-D) zu einer entsprechenden und unterschiedlichen Zeitverzögerung zuordnet;
wobei das Verzögerungserzeugungssystem die Standortdetektionsvorrichtungen (12) und die Nachschlagtabellen der Überwachungssysteme (11) umfasst; und
wobei jedes Überwachungssystem (11) jeder Zugeinheit programmiert ist, um:
den aktuellen Gleisblock auf Basis des aktuellen Standorts der Zugeinheit (1), der von der Standortdetektionsvorrichtung (12) detektiert wurde, zu identifizieren;
die Zeitverzögerung, die dem aktuellen Gleisblock zugeordnet ist, aus der Nachschlagtabelle zu bestimmen; und
dem Trennschalter (14) zu befehlen, die Traktionseinrichtung (10) nach dem Vergehen der bestimmten Zeitverzögerung ab der Detektion der Wiederherstellung der Leistungsversorgung durch die Messvorrichtung wieder zu verbinden.

9. Wiederverbindungssystem nach Anspruch 8, wobei sich die Zeitverzögerungen der Gleisblöcke jedes Leistungsversorgungsabschnitts um zumindest 20 ms voneinander unterscheiden.

10. Zugeinheit (1) eines Wiederverbindungssystems nach Anspruch 8 oder 9.

11. Verfahren zum Wiederverbinden von elektrisch angetriebenen Zugeinheiten (1) mit elektrischen Leistungsversorgungsleitungen (3), die sich entlang entsprechender Gleise (4) eines Schienennetzes erstrecken, wobei das Netz in mehrere Leistungsversorgungsabschnitte (A-D) geteilt ist, wobei jeder Leistungsversorgungsabschnitt eine entsprechende Quelle (2) elektrischer Leistung für die Versorgungsleitungen der Gleise in diesem Abschnitt aufweist, und jede Zugeinheit (1) eine Messvorrichtung, um eine Störung und Wiederherstellung der Leistungsversorgung durch die Versorgungsleitung des Gleises zu detektieren, auf dem sich die Einheit zu dem Zeitpunkt befindet, einen Trennschalter (14), um die Traktionseinrichtung (10) der Einheit von der Versorgungsleitung zu trennen oder wieder damit zu verbinden, und ein Überwachungssystem (11) aufweist, das mit der Messvorrichtung und dem Trennschalter wirkverbunden ist;
wobei das Verfahren umfasst, dass:
das Überwachungssystem (11) der Zugeinheiten (1) den Trennschaltern (14) der Zugeinheiten befiehlt, die Traktionseinrichtung (10) der Zugeinheiten zu trennen, wenn die Messvorrichtungen der Zugeinheiten eine Störung der Leistungsversorgung detektieren;
wobei das Verfahren durch die folgenden Schritte gekennzeichnet ist:
das spontane Bestimmen einer entsprechenden und unterschiedlichen Trennschalter-Schließzeit für jede der Zugeinheiten (1) innerhalb eines bestimmten Leistungsversorgungsabschnitts (A-D) bei Wiederherstellung der Leistungsversorgung für die Zugeinheiten;
das Bereitstellen der derart bestimmten entsprechenden Trennschalter-Schließzeiten an die Überwachungssysteme (11) der Zugeinheiten (1); und
das Befehlen der Trennschalter (14) durch die Überwachungssysteme (11) der Zugeinheiten (1) nach der Detektion der Wiederherstellung der Leistungsversorgung durch ihre Messvorrichtungen, die Traktionseinrichtung (10) gemäß den derart bereitgestellten entsprechenden Trennschalter-Schließzeiten wieder zu verbinden;
wobei eine Trennschalter-Schließzeitverzögerung, bei der eine bestimmte der Zugeinheiten (1) die Traktionseinrichtung nach Wiederherstellung der Leistungsversorgung wieder verbindet, zwischen Trenn- und Wiederverbindungsereignissen variiert.

12. Verfahren nach Anspruch 11, wobei jede Zugeinheit (1) außerdem eine drahtlose Kommunikationsvorrichtung (13) aufweist, mit der das Überwachungssystem (11) ebenfalls wirkverbunden ist, und wobei das Verfahren umfasst, dass:
die drahtlosen Kommunikationsvorrichtungen (13) Fortsetzungsanfragesignale an ein gleisseitiges Steuersystem (7) überträgt, wobei die Fortsetzungsanfragesignale die entsprechenden Einheiten identifiziert;
das gleisseitige Steuersystem (7) spontan die Trennschalter-Schließzeiten für die Zugeinheiten bei Empfang der Fortsetzungsanfragesignale bestimmt; und
das gleisseitige Steuersystem (7) die derart bestimmten Trennschalter-Schließzeiten als Wiederverbindungsbefehlssignale über die drahtlosen Kommunikationsvorrichtungen (13) an die Zugeinheiten (1) überträgt.

13. Verfahren nach Anspruch 11, wobei jede Zugeinheit (1) außerdem eine entsprechende Standortdetektionsvorrichtung (12) aufweist, um den aktuellen Standort der Zugeinheit (1) zu detektieren, wobei das Überwachungssystem (11) dieser Einheit mit der Standortdetektionsvorrichtung (12) wirkverbunden ist;
wobei das Überwachungssystem (11) jeder Zugeinheit eine entsprechende Nachschlagtabelle speichert, die (i) die Leistungsversorgungsabschnitte (A-D) und (ii) Gleisblöcke identifiziert, die Unterteilungen der Gleise (4) jedes Leistungsversorgungsabschnitts darstellen, wobei nur eine Zugeinheit in jedem Gleisblock zu einem bestimmten Zeitpunkt erlaubt ist, wobei die Nachschlagtabelle außerdem die Gleisblöcke jedes Leistungsversorgungsabschnitts (A-D) zu einer entsprechenden und unterschiedlichen Zeitverzögerung zuordnet; und wobei das spontane Bestimmen der entsprechenden und anderen Trennschalter-Schließzeit für jede der Zugeinheiten (1) von dem Überwachungssystem (11) jeder Zugeinheit (1) durchgeführt wird:
Identifizieren des aktuellen Gleisblocks auf Basis des aktuellen Standorts der Zugeinheit (1), der von der Standortdetektionsvorrichtung (12) detektiert wurde, und Bestimmen der Zeitverzögerung, die dem aktuellen Gleisblock zugeordnet ist, aus der Nachschlagtabelle, wobei das Überwachungssystem (11) jeder Zugeinheit (1) die Traktionseinrichtung (10) nach dem Vergehen der bestimmten Zeitverzögerung ab der Detektion der Wiederherstellung der Leistungsversorgung durch die Messvorrichtung wieder verbindet.

## Revendications

1. Système de reconnexion destiné à reconnecter des unités de train à traction électrique (1) à des lignes d'alimentation en énergie électrique (3) qui s'étendent le long de voies respectives (4) d'un réseau ferroviaire, le réseau étant divisé en une pluralité de sections d'alimentation en énergie (A-D), chaque section d'alimentation en énergie présentant une source respective (2) d'énergie électrique pour les lignes d'alimentation des voies dans cette section, le système de reconnexion incluant :
une pluralité des unités de train (1), chaque unité présentant un dispositif de mesure destiné à détecter une défaillance et un rétablissement de l'alimentation en énergie par la ligne d'alimentation de la voie sur laquelle l'unité est actuellement située, un disjoncteur (14) destiné à déconnecter et à reconnecter l'équipement de traction (10) de l'unité de la / à la ligne d'alimentation, et un système de supervision (11) qui est fonctionnellement connecté au dispositif de mesure et au disjoncteur ;
le système de reconnexion étant **caractérisé par** :
un système de génération de retard qui est configuré de manière à déterminer extemporanément un temps de fermeture de disjoncteur respectif et différent pour chacune des unités de train dans une section d'alimentation en énergie donnée, lors du rétablissement de l'alimentation en énergie des unités de train (1), et à fournir, aux systèmes de supervision (11) des unités de train, les temps de fermeture de disjoncteur respectifs ainsi déterminés ;
dans lequel chaque système de supervision (11) est programmé pour :
commander à son disjoncteur (14) de déconnecter son équipement de traction (10) lorsque son dispositif de mesure détecte une défaillance de l'alimentation en énergie ; et
après la détection, par le dispositif de mesure, du rétablissement de l'alimentation en énergie, commander, au disjoncteur (14), de reconnecter l'équipement de traction (10) selon le temps de fermeture de disjoncteur, pour son unité de train (1), fourni par le système de génération de retard ;
moyennant quoi un retard temporel de fermeture de disjoncteur auquel il est commandé, à un disjoncteur donné quelconque parmi les disjoncteurs (14), de reconnecter son équipement de traction (10), varie entre des événements de déconnexion et de reconnexion.

2. Système de reconnexion selon la revendication 1, dans lequel chaque unité de train (1) présente en outre un dispositif de communication sans fil (13) auquel son système de supervision (11) est également fonctionnellement connecté, et dans lequel le système de génération de retard est un système de commande côté voie (7) qui communique par voie hertzienne avec les dispositifs de communication sans fil des unités de train, moyennant quoi le système de commande côté voie détermine extemporanément les temps de fermeture de disjoncteur pour les unités de train lors de la réception de signaux de demande de reprise transmis par les dispositifs de communication sans fil des unités de train, les signaux de demande de reprise identifiant également les unités respectives, et moyennant quoi les temps de fermeture de disjoncteur ainsi déterminés sont transmis en tant que des signaux de commande de reconnexion, aux unités de train, par l'intermédiaire de leurs dispositifs de communication sans fil.

3. Système de reconnexion selon la revendication 2, dans lequel le système de commande côté voie (7) est en outre configuré de manière à :
déterminer les emplacements des unités de train (1) sur le réseau ; et
déterminer, à partir des signaux de demande de reprise et des emplacements des unités de train (1) sur le réseau, les identités de ces unités de train dans chaque section d'alimentation en énergie (A-D) qui ont transmis des signaux de demande de reprise ;
moyennant quoi les temps de fermeture de disjoncteur respectifs et différents sont déterminés par le système de commande côté voie pour chaque section d'alimentation en énergie sur une base « section par section ».

4. Système de reconnexion selon la revendication 2 ou 3,
dans lequel chaque système de supervision (11) est en outre programmé pour : transmettre le signal de demande de reprise au système de commande côté voie (7) uniquement lors de la détection, par le dispositif de mesure, du rétablissement de l'alimentation en énergie ; et envoyer un signal d'accusé de réception, au système de commande côté voie (7), en utilisant le dispositif de communication sans fil (13) de l'unité de train après la réception, par le dispositif de communication sans fil, du signal de commande de reconnexion ; et
dans lequel le système de commande côté voie (7) est en outre configuré de manière à transmettre successivement les signaux de commande de reconnexion respectifs aux unités de train identifiées (1), dans chaque section d'alimentation en énergie (A-D), chaque signal de commande de reconnexion successif étant transmis après la réception du signal d'accusé de réception transmis par l'unité de train, en réponse au signal de commande de reconnexion précédent pour cette section d'alimentation en énergie.

5. Système de reconnexion selon la revendication 2 ou 3, dans lequel :
chaque système de supervision (11) est en outre programmé pour transmettre le signal de demande de reprise au système de commande côté voie (7) lors de la détection, par le dispositif de mesure, d'une défaillance de l'alimentation en énergie ;
les signaux de commande de reconnexion fournissent les temps de fermeture de disjoncteur en tant que des retards temporels prédéterminés respectifs ;
chaque système de supervision (11) est en outre programmé pour stocker le retard temporel prédéterminé respectif ; et
lors de la détection, par son dispositif de mesure, du rétablissement de l'alimentation en énergie, chaque système de supervision (11) commande à son disjoncteur (14) de reconnecter l'équipement de traction (10) selon le retard temporel prédéterminé stocké.

6. Système de commande côté voie (7) du système de reconnexion selon l'une quelconque des revendications 2 à 5.

7. Système de reconnexion selon l'une quelconque des revendications 1 à 6, dans lequel le retard temporel prédéterminé est d'au moins 20 ms.

8. Système de reconnexion selon la revendication 1, dans lequel :
chaque unité de train (1) présente en outre un dispositif de détection d'emplacement respectif (12) destiné à détecter l'emplacement en cours de l'unité de train (1), le système de supervision (11) de cette unité étant fonctionnellement connecté au dispositif de détection d'emplacement (12) ; et
le système de supervision (11) de chaque unité de train stocke une table de consultation respective qui identifie (i) les sections d'alimentation en énergie (A-D), et (ii) des blocs de voie qui correspondent à des subdivisions des voies (4) de chaque section d'alimentation en énergie, une seule unité de train étant autorisée dans chaque bloc de voie à tout moment donné, la table de consultation associant en outre les blocs de voie de chaque section d'alimentation en énergie (A-D) à un retard temporel respectif et différent ;
dans lequel le système de génération de retard comprend les dispositifs de détection d'emplacement (12) et les tables de consultation des systèmes de supervision (11) ; et
dans lequel chaque système de supervision (11) de chaque unité de train est programmé pour :
identifier le bloc de voie en cours sur la base de l'emplacement en cours de l'unité de train (1) détecté par le dispositif de détection d'emplacement (12) ;
déterminer, à partir de sa table de consultation, le retard temporel associé au bloc de voie en cours ; et
commander, au disjoncteur (14), de reconnecter l'équipement de traction (10) après l'écoulement du retard temporel déterminé temporisé à partir de l'instant où le dispositif de mesure détecte un rétablissement de l'alimentation en énergie.

9. Système de reconnexion selon la revendication 8, dans lequel les retards temporels des blocs de voie de chaque section d'alimentation en énergie diffèrent les uns des autres d'au moins 20 ms.

10. Unité de train des unités de train (1) du système de reconnexion selon la revendication 8 ou 9.

11. Procédé de reconnexion d'unités de train à traction électrique (1) à des lignes d'alimentation en énergie électrique (3) qui s'étendent le long de voies respectives (4) d'un réseau ferroviaire, le réseau étant divisé en une pluralité de sections d'alimentation en énergie (A-D), chaque section d'alimentation en énergie présentant une source respective (2) d'énergie électrique pour les lignes d'alimentation des voies dans cette section, et chaque unité de train (1) présentant un dispositif de mesure pour détecter une défaillance et un rétablissement de l'alimentation en énergie par la ligne d'alimentation de la voie sur laquelle l'unité est actuellement située, un disjoncteur (14) pour déconnecter et reconnecter l'équipement de traction (10) de l'unité de la / à la ligne d'alimentation, et un système de supervision (11) qui est fonctionnellement connecté au dispositif de mesure et au disjoncteur ;
le procédé incluant l'étape ci-dessous dans laquelle :
les systèmes de supervision (11) des unités de train (1) commandent aux disjoncteurs (14) des unités de train de déconnecter l'équipement de traction (10) des unités de train lorsque les dispositifs de mesure des unités de train détectent une défaillance de l'alimentation en énergie ;
le procédé étant **caractérisé par** les étapes ci-dessous consistant à ou dans lesquelles :
déterminer extemporanément un temps de fermeture de disjoncteur respectif et différent pour chacune des unités de train (1) dans une section d'alimentation en énergie donnée (A-D), lors du rétablissement de l'alimentation en énergie des unités de train ;
fournir, aux systèmes de supervision (11) des unités de train (1), les temps de fermeture de disjoncteur respectifs ainsi déterminés ; et
les systèmes de supervision (11) des unités de train (1) commandent à leurs disjoncteurs (14), après la détection, par leurs dispositifs de mesure, du rétablissement de l'alimentation en énergie, de reconnecter leur équipement de traction (10) selon les temps de fermeture de disjoncteur respectifs ainsi fournis ;
moyennant quoi un retard temporel de fermeture de disjoncteur auquel une unité donnée quelconque des unités de train (1) reconnecte son équipement de traction après le rétablissement de l'alimentation en énergie varie entre des événements de déconnexion et de reconnexion.

12. Procédé selon la revendication 11, dans lequel chaque unité de train (1) présente en outre un dispositif de communication sans fil (13) auquel son système de supervision (11) est également fonctionnellement connecté, et dans lequel le procédé inclut les étapes ci-dessous dans lesquelles :
les dispositifs de communication sans fil (13) transmettent des signaux de demande de reprise à un système de commande côté voie (7), les signaux de demande de reprise identifiant les unités respectives ;
le système de commande côté voie (7) détermine extemporanément les temps de fermeture de disjoncteur pour les unités de train, lors la réception des signaux de demande de reprise ; et
le système de commande côté voie (7) transmet les temps de fermeture de disjoncteur ainsi déterminés, en tant que des signaux de commande de reconnexion, aux unités de train (1), par l'intermédiaire de leurs dispositifs de communication sans fil (13).

13. Procédé selon la revendication 11, dans lequel chaque unité de train (1) présente en outre un dispositif de détection d'emplacement respectif (12) destiné à détecter l'emplacement en cours de l'unité de train (1), le système de supervision (11) de cette unité étant fonctionnellement connecté au dispositif de détection d'emplacement (12) ; dans lequel le système de supervision (11) de chaque unité de train stocke une table de consultation respective qui identifie (i) les sections d'alimentation en énergie (A-D), et (ii) des blocs de voie qui correspondent à des subdivisions des voies (4) de chaque section d'alimentation en énergie, une seule unité de train étant autorisée dans chaque bloc de voie à tout moment donné, la table de consultation associant en outre les blocs de voie de chaque section d'alimentation en énergie (A-D) à un retard temporel respectif et différent ; et dans lequel la détermination extemporanée du temps de fermeture de disjoncteur respectif et différent pour chacune des unités de train (1) est mise en œuvre par le système de supervision (11) de chaque unité de train (1), le procédé comprenant les étapes ci-après, mises en œuvre par le système de supervision, consistant à : identifier le bloc de voie en cours sur la base de l'emplacement en cours de l'unité de train (1) détecté par le dispositif de détection d'emplacement (12), et déterminer, à partir de sa table de consultation, le retard temporel associé au bloc de voie en cours, moyennant quoi le système de supervision (11) de chaque unité de train (1) reconnecte l'équipement de traction (10) après l'écoulement du retard temporel déterminé à partir de l'instant où le dispositif de mesure détecte le rétablissement de l'alimentation en énergie.
